# EUROPÄISCHE PATENTSCHRIFT

(11) **EP 0 741 253 B1**
(45) Veröffentlichungstag und Bekanntmachung des Hinweises auf die Patenterteilung: **22.08.2001**
(21) Anmeldenummer: 96810141.0
(22) Anmeldetag: 08.03.1996
(51) Int. Cl.: F16C 13/00

(54) **Presswalze und Maschine mit Presswalze**
Press roll and machine with a press roll
Cylindre de pression et machine équipée d'un tel cylindre

(30) Priorität: 05.05.1995 CH 130095
(43) Veröffentlichungstag der Anmeldung: 06.11.1996
(73) Patentinhaber: Voith Paper Patent GmbH, 89522 Heidenheim (DE)
(72) Erfinder: Schnyder, Eugen, 5622 Waltenschwil (CH)
(74) Vertreter: Knoblauch, Andreas, Dr.-Ing.

(56) Entgegenhaltungen:
- DE-A- 2 363 509
- DE-B- 1 240 804
- FR-A- 2 310 882
- US-A- 3 119 324
- US-A- 3 638 292
- US-A- 4 510 865

## Beschreibung

Die Erfindung betrifft eine Presswalze mit steuerbarer Biegungslinie gemäss dem Oberbegriff des Anspruches 1, sowie Maschine zur Behandlung von bahnförmigen oder plattenförmigen Material mit einer Presswalze.

Derartige Presswalzen, sogenannte NIPCO-Walzen, sind aus der Druckschrift US-A-3,119,324 bekannt. Diese Presswalzen enthalten einen feststehenden Träger, einen um den Träger rotierenden Walzenmantel und eine Mehrzahl von Stützquellen, um den Walzenmantel am Träger abzustützen. Der Walzenmantel ist elastisch verformbar und besteht aus armiertem Elastomer oder Polyurethan. Die Stützquellen sind in gleichen Abständen in einer Reihe liegend angeordnet und können der Durchbiegung einer Gegenwalze frei folgen. Jede Stützquelle besteht aus einer Kolbenzylinderanordnung, die mit einer Druckflüssigkeit beaufschlagbar ist und einem Gleitschuh, der unter Einwirkung der Anordnung gegen den Walzenmantel verschiebbar ist.

Diese Presswalzen werden bis in den oberen Geschwindigkeitsbereich, d.h. grösser 15 m/s und im oberen Linienkraftbereich, d.h. 300 N/mm eingesetzt. Dies stellt hohe Anforderungen an die konstruktive Ausführung und hat einen grossen Aufwand zur Folge, insbesondere wird eine entsprechende Druckquelle benötigt.

Aus der Druckschrift US-A-3,638,292 ist eine weitere Presswalze bekannt. Diese Presswalze weist den Nachteil auf, dass sie keine steuerbare Biegungslinie aufweist, da ein Biegung mit konstruktiven Massnahmen möglichst verhindert wird. Aus der Druckschrift US-A-4,510,865 ist eine weitere Presswalze bekannt, deren Biegungslinie nur begrenzt steuerbar ist und deren Linienkraft sehr begrenzt ist.

Hier will die Erfindung Abhilfe schaffen. Die Erfindung, wie sie in den Ansprüchen gekennzeichnet ist, löst die Aufgabe eine Presswalze mit steuerbarer Biegelinie zu schaffen, die im unteren Geschwindigkeitsbereich kleiner 15 m/s und unteren Linienkraftbereich 80 N/mm zur Anwendung kommt und mit einem Druckmedium von max. 10 bar aus einem herkömmlichen Hilfsenergienetz betrieben wird, sowie in einer Leichtbauweise aufgeführt ist und deren Anschmiegsamkeit deutlich verbessert ist.

Die mit der Erfindung erzielbaren Vorteile sind im wesentlichen darin zu sehen, dass
- mit den pneumatischen beaufschlagten Rollkörpern, die Abstände zwischen den Stellen der Krafteinleitung geringer sind,
- mit der Anwendung eines Mantelrohres eine gleichmässige Linienkraft erzeugt werden kann, und das Antriebsmoment der Walze klein gehalten werden kann,
- mit der Anwendung eines Laufmantels, der aus Ringabschnitten und Zwischenringen besteht oder wendelförmig, mit aneinander liegenden Windungen ausgebildet ist, kann die Lastverteilung über die Walzenflächenbreite gleichmässiger verteilt werden und die axiale Flexibilität verbessert werden,
- mit der Anwendung einer Kolbenzylinderanordnung mit einem langgestreckten Zylinderblock kann die Herstellung verbilligt werden und
- mit der Anwendung eines Kraftverstärkers kann das Einsatzgebiet erweitert werden.

Eine Maschine zur Behandlung von bahnförmigem Material mit der Presswalze ist dadurch gekennzeichnet, dass die Presswalze eine F-Walze oder K-Walze ist.

Hieraus ergibt sich der Vorteil einer breiten Anwendung der Presswalze, z.B. in Druckmaschinen, Textilmaschinen und dgl..

Im folgenden wird die Erfindung anhand der beiliegenden Zeichnungen erläutert.

Es zeigen:
- Fig. 1: einen Endabschnitt einer bevorzugten Ausführungsform einer erfindungsgemässen Presswalze im Schnitt;
- Fig. 2: einen Schnitt entlang der Linie II-II in Fig. 1;
- Fig. 3: eine räumliche Darstellung einer bevorzugten Ausführungsform eines Stützelementes;
- Fig. 4: eine räumliche Darstellung einer anderen Ausführungsform eines Stützelementes;
- Fig. 5: einen Teil eines Endabschnittes einer anderen Ausführungsform einer erfindungsgemässen Presswalze und

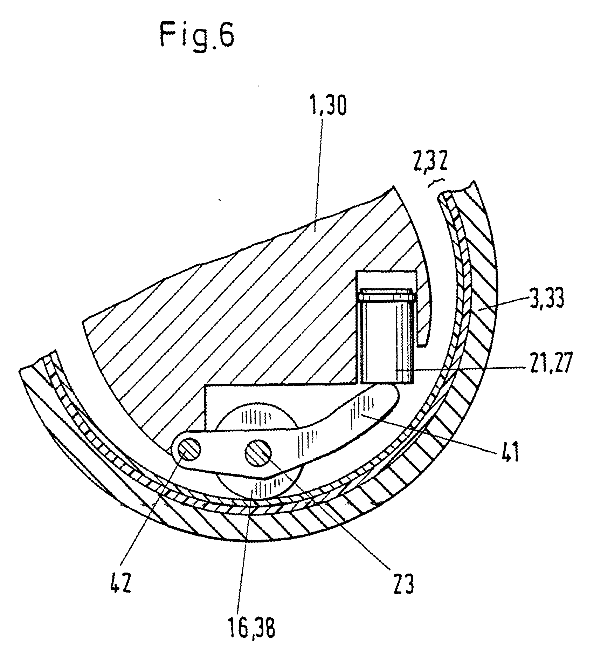

- Fig. 6: einen Schnitt entlang der Linie VI-VI in Fig. 1, in welcher ein Stützelement mit einer Anordnung zur Kraftverstärkung dargestellt ist.

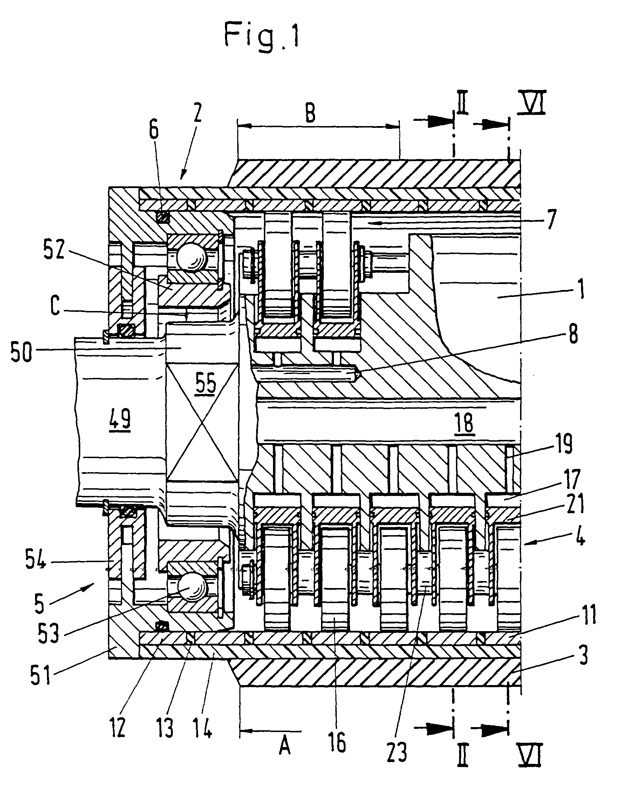

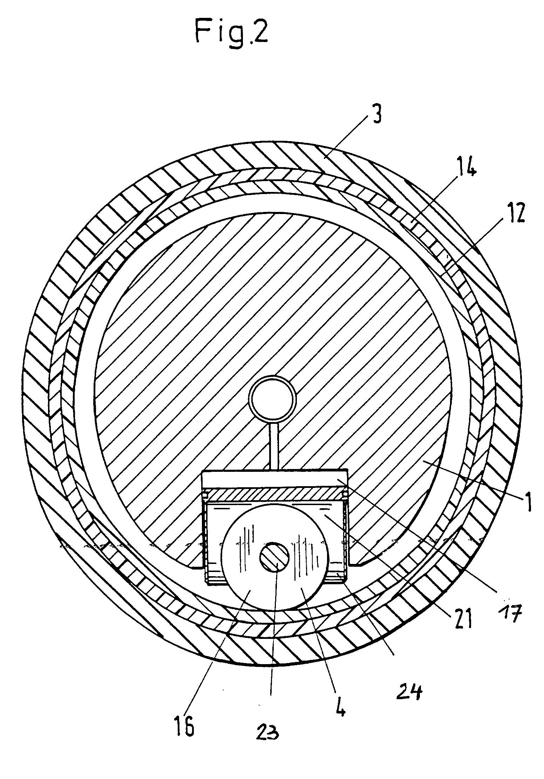

Es wird auf die Fig. 1 bis 3 Bezug genommen. Die Walze enthält einen Träger 1, der verdrehfest angeordnet ist, ein Mantelrohr 2 mit einem Walzenmantel 3 aus Elastomer, welches den Träger 1 umschliesst und eine Mehrzahl von Stützelemente 4, die über Walzenbreitenfläche A verteilt in einer Reihe angeordnet sind. Ferner ist ein Führungslager 5 vorgesehen, auf dem das Mantelrohr 2 angeordnet ist. Zwischen dem Führungslager 5 und Mantelrohr 2 ist ein Dichtungsring 6 angeordnet. Es wird darauf hingewiesen, dass das Führungslager am anderen Endabschnitt der Walze gleich ausgebildet ist. Ferner ist eine Rückzugeinrichtung 7 vorgesehen.

Das Mantelrohr 2 besteht aus einem Laufrohr 11, welches aus einer Mehrzahl von Ringabschnitten 12 aus Metall und Zwischenringen 13 aus elastisch verformbarem Material zusammengesetzt ist und einem Stützmantel 14 aus Kunststoff. Als Zwischenringe können O-Ringe oder ein Vorvulkanisat verwendet werden. Der Stützmantel 14 besteht mit Vorteil aus glasfaserverstärktem Kunststoff, das durch ein Wickelverfahren auf das Laufrohr 11 aufgebracht ist, so dass das Mantelrohr 2 als ein Bauteil ausgebildet ist. Auf diesem Bauteil wird anschliessend der Walzenmantel 3 aus Elastomer aufgebracht, z.B. aufvulkanisiert.

Die Stützelemente 4 umfassen eine Kolbenzylinderanordnung und einen Rollkörper 16 in Form eines Wälzlagers auf. Die Zylinderausnehmungen 17 sind im Träger 1 ausgebildet, das mit einem Leitungssystem in Verbindung steht. Das Leitungssystem umfasst einen Hauptstrang 18, der sich in der Längserstreckung des Trägers 1 erstreckt und eine der Anzahl von Stützelementen 4 entsprechende Anzahl von Abzweigen 19, die in die Zylinderausnehmung 17 münden. Der Kolben 21 weist einen Kolbenring 22 auf und ist in der Zylinderausnehmung 17 beweglich angeordnet, um den Rollkörper 16 bezüglich dem Walzenmantel 2 zu verlagern. Die Rollkörper 16 sind auf einer Achse 23 gelagert. Mit dieser Achse wird in vorteilhafter Weise eine Basisorientierung der Rollkörper erzielt. Mit dieser Orientierung wird erreicht, dass die Rollkörper bei gebogenem Laufrohr 12 nicht auf der Kante abrollen, weil die Kolben 21 quer zur Achse der Zylinderausnehmung 17 auslenkbar sind. Der Kolben 21 weist einen Abschnitt 24 auf, der den Rollkörper teilweise umschliesst und die Achse 23 übergreift, so dass der Kolben 21 in direkter Wirkverbindung mit der Achse 23 steht.

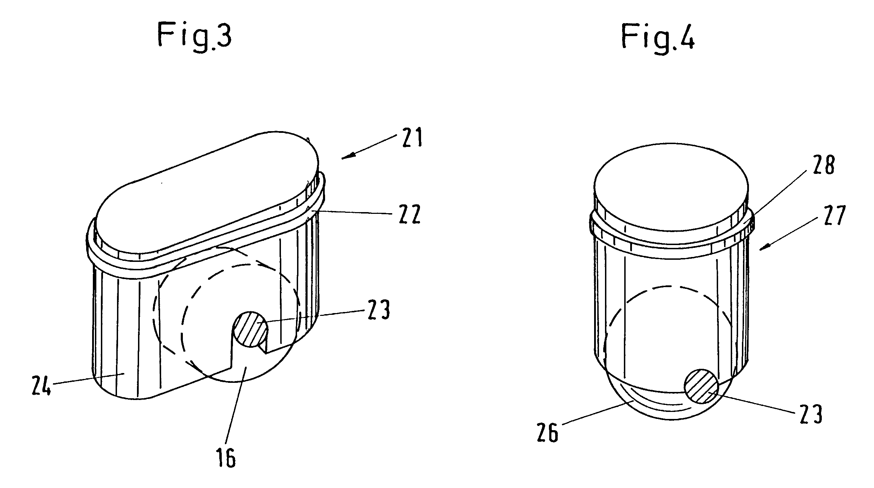

Bei der in Fig. 4 gezeigten Ausführungsform ist der Rollkörper eine Kugel 26, die auf der Achse 23 gelagert ist. In diesem Fall ist der Kolben 27 zylinderförmig ausgebildet und mit einem Kolbenring 28 ausgerüstet. Bei dieser Ausführungsform kann die Kolbenzylinderanordnung mit einer Zylinderbohrung versehen werden.

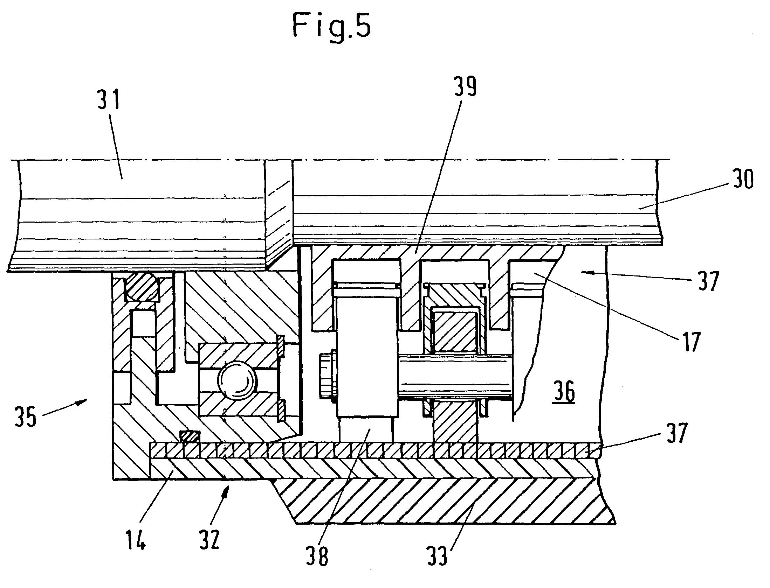

Die Fig. 5 zeigt eine Presswalze, die einen feststehenden Träger 30, ein Mantelrohr 32 mit einem Walzenmantel 33 aus Elastomer, und eine Mehrzahl von Stützelementen enthält, deren Ausbildung und Zuordnung zueinander gleich wie bei der Ausführung gemäss Fig. 1 bis 3 ist. Ferner ist ein Führungslager 35 vorgesehen, auf dem das Mantelrohr 32 angeordnet ist.

Das Mantelrohr besteht aus einem Laufrohr 36, welches wendelförmig, mit aneinander liegenden Windungen 37 ausgebildet ist und aus dem Stützmantel 14 aus glasfaserverstärktem Kunststoff, der wie bereits erwähnt durch Wickelung aufgebracht ist.

Die Stützelemente 4 umfassen eine Kolbenzylinderanordnung 37 und einen Rollkörper26. Die Zylinderausnehmungen 17 sind in einem Zylinderblock 39 ausgebildet, der am Träger 30 befestigt ist. Die Zylinderausnehmungen 17 stehen mit einem Leitungssystem (nicht dargestellt) in Verbindung. Der Kolben 21 ist beweglich in der Zylinderausnehmung 17 angeordnet, um die Rollkörper 26 bezüglich dem Mantelrohr 32 zu verlagern. Die Rollkörper 26 sind auf der Achse 23 gelagert. Der Kolben 21 weist den Abschnitt 24 auf, der den Rollkörper umschliesst und die Achse 23 übergreift (Fig. 3 und 4).

Bei Maschinen zur Be- und/oder Verarbeitung von bahn- oder plattenförmigem Material werden Presswalzen verwendet, die als frei bewegliche, selbstanstellende Walze auch F-Walze genannt oder als konzentrisch geführte Walze auch K-Walze genannt ausgebildet werden. Der Unterschied zwischen der F-Walze und der K-Walze ergibt sich aus der Ausbildung der Führungslager an den Stirnseiten der Presswalzen und die Anwendung der Rückzugeinrichtung 7 bei der F-Walze.

In der Fig. 1 ist das Führungslager 5 für eine F-Walze dargestellt. Der Träger 1 weist an beiden Enden einen Lagerzapfen 49 auf, um die Presswalze in einer Maschine anzuordnen. Angrenzend an den Träger 1 ist ein Abschnitt 50 ausgebildet, der mit dem Führungslager zusammenwirkt. Das Führungslager weist einen Aussenring 51, einen Innenring 52, ein Kugellager 53 und einen Abdichtring 54 auf. Die Rückzugeinrichtung 7, weist zwei Stützelemente 4 auf. Diese Stützelemente 4 wirken auf einen Abschnitt B ein, um das Mantelrohr 2 entgegen der Wirkrichtung der Presswalze zu biegen. Hierzu werden die Stützelemente 4 über ein getrenntes Leitungssystem 8 mit Druckluft beaufschlagt. Um die Biegung des Abschnittes B zu ermöglichen, ist zwischen dem Innenring 52 und dem Träger 1 ein Abstand C vorgesehen und am Träger 1 ist eine Führungsfläche 55 für den Innenring ausgebildet. Mit der Rückzugeinrichtung kann in vorteilhafter Weise der während der Anwendung nicht beaufschlagte Mantelflächenbereich entlastet oder von einer Gegenwalze abgehoben werden.

In Fig. 5 ist das Führungslager 35 für die K-Walze dargestellt. Der Träger 30 weist einen Lagerzapfen 31 auf, um die Presswalze in einer Maschine anzuordnen. Das Führungslager ist gleichartig wie das Führungslager 5 für die F-Walze ausgebildet. Im Gegensatz zur F-Walze ist der Innenring 52 am Lagerzapfen des Trägers 31 abgestützt, wodurch auf eine Führungsfläche am Träger wie dies bei der F-Walze vorgesehen ist verzichtet werden kann.

Die Presswalze enthält einen feststehenden Träger 30, ein Mantelrohr 32 mit einem Walzenmantel 33 und eine Mehrzahl von pneumatisch beaufschlagbaren Rollkörpern 26, um den Walzenmantel 33 an der Pressstelle am Träger 30 abzustützen.

Die in Leichtbauweise ausgeführte Presswalze zeigt eine gute Anschmiegsamkeit und kann aus einem herkömmlichen Hilfsenergienetz mit einem Druck von max. 10 bar betrieben werden. Die Presswalze kann als F-Walze oder K-Walze in Maschinen zur Behandlung von bahnförmigem oder plattenförmigem Material, z.B. Druckmaschinen, Textilmaschinen oder dgl. eingesetzt werden.

## Patentansprüche

1. Presswalze mit steuerbarer Biegungslinie, die einen feststehenden Träger (1;30), einen um den Träger (1;30) rotierenden Walzenmantel (3;33) und eine Mehrzahl von Stützelementen (4) aufweist, wobei die Stützelemente (4) über die Walzenbreitenfläche verteilt in einer Reihe angeordnet sind, um den Mantel (3;33) im Bereich der Pressstelle am Träger (1;30) abzustützen, wobei die Stützelemente (4) pneumatisch beaufschlagbare Rollkörper (16; 26; 38) aufweisen, und wobei einer Mehrzahl von Kolbenzylinderanordnungen (17,21) jeweils ein Rollkörper (16; 26) zugeordnet ist, dadurch gekennzeichnet, dass zumindest zwei benachbarte Rollkörper (16; 26) auf einer gemeinsamen Achse (23) gelagert sind.

2. Presswalze nach Anspruch 1, dadurch gekennzeichnet, dass in Verlaufsrichtung der Presswalze der Innendurchmesser der Zylinderausnehmung (17) grösser ist als die Breite des Rollkörpers (16; 26).

3. Presswalze nach einem der vorhergehenden Ansprüche, dadurch gekennzeichnet, dass die Stützelemente (4) teileweise über ein getrenntes Leitungssystem (8) pneumatisch beaufschlagbar sind.

4. Presswalze nach einem der vorhergehenden Ansprüche, dadurch gekennzeichnet, dass ein Mantelrohr (2; 32) für den Walzenmantel (3; 33) vorgesehen ist, das den Träger (1; 30) und die Stützelemente (4) umschliesst und mit den Stützelementen in Wirkverbindung ist, um die abrollende Last in den Walzenmantel (3; 33) einzuleiten.

5. Presswalze nach Anspruch 4, dadurch gekennzeichnet, dass das Mantelrohr (2; 32) aus einem Laufmantel (11; 36) und einem Stützmantel (14) besteht.

6. Presswalze nach Anspruch 5, dadurch gekennzeichnet, dass der Laufmantel (11) aus Ringabschnitten (12) aus Metall und aus Zwischenringen (13) aus elastisch verformbaren Material besteht.

7. Presswalze nach Anspruch 5, dadurch gekennzeichnet, dass der Laufmantel (36) wendelförmig, mit miteinander anliegenden Windungen (37) ausgebildet ist.

8. Presswalze nach einem der Ansprüche 5 bis 7, dadurch gekennzeichnet, dass der Walzenmantel (3) auf dem Stützmantel (14) befestigt ist.

9. Presswalze nach einem der Ansprüche 1 bis 8, gekennzeichnet durch einen langgestreckten Zylinderblock (37) mit einer Mehrzahl von Zylinderbohrungen (17), die in einer Reihe angeordnet sind.

10. Presswalze nach einem der Ansprüche 1 bis 9, dadurch gekennzeichnet, dass der Kolben (21; 27) der Anordnung einen Abschnitt aufweist, der mit der Achse (23) in Verbindung steht.

11. Presswalze nach einem der Ansprüche 1 bis 10, dadurch gekennzeichnet, dass eine Anordnung zur Kraftverstärkung zwischen Kolben (21; 27) und Rollkörper (16; 26) vorgesehen ist.

12. Presswalze nach einem der Ansprüche 1 bis 11, dadurch gekennzeichnet, dass der Rollkörper (16; 26) zylinderförmig oder kugelförmig ausgebildet ist.

13. Presswalze nach einem der Ansprüche 1 bis 12, dadurch gekennzeichnet, dass der Rollkörper (16; 26) aus Metall oder Nichtmetall besteht.

14. Presswalze nach einem der Ansprüche 1 bis 13, dadurch gekennzeichnet, dass der Rollkörper (16; 26) ein Wälzlager ist.

15. Presswalze nach einem der Ansprüche 1 bis 14, dadurch gekennzeichnet, dass der Rollkörper (16; 26) eine bombierte Lauffläche aufweist.

16. Maschine zur Behandlung von bahnförmigen oder plattenförmigen Material mit einer Presswalze nach einem der Ansprüche 1 bis 15, dadurch gekennzeichnet, dass die Presswalze eine F-Walze oder eine K-Walze ist.

## Claims

1. Pressing roll with a controllable deflection line, comprising a fixed support (1; 30), a roll shell (3; 33) rotating about the support (1; 30) and a plurality of supporting elements (4), the supporting elements (4) being distributed in a row over the width of the roll in order to support the shell (3; 33) on the support (1; 30) in the region of the pressing point, the supporting elements (4) having pneumatically actuated roller bodies (16; 26; 38) and each roller body (16; 26) being associated with a plurality of piston cylinder arrangements (17, 21), characterised in that at least two adjacent roller bodies (16; 26) are supported on one common axis (23).

2. Pressing roll according to claim 1, characterised in that the inner diameter of the cylinder recess (17) is larger than the width of the roller body (16; 26) in the running direction of the pressing roll.

3. Pressing roll according to one of the preceding claims, characterised in that the supporting elements (4) can be pneumatically actuated partly via a separate conduit system (8).

4. Pressing roll according to one of the preceding claims, characterised in that a shell tube (2; 32) is provided for the roll shell (3; 33), surrounding the support (1; 30) and the supporting elements (4) and operatively connected to the supporting elements in order to direct the rolling load into the roll shell (3; 33).

5. Pressing roll according to claim 4, characterised in that the shell tube (2; 32) consists of a running shell (11; 36) and a supporting shell (14).

6. Pressing roll according to claim 5, characterised in that the running shell (11) consists of ring sections (12) made of metal and intermediate rings (13) made of elastically deformable material.

7. Pressing roll according to claim 5, characterised in that the running shell (36) is spiral-shaped, with contiguous turns (37).

8. Pressing roll according to one of claims 5 to 7, characterised in that the roll shell (3) is secured to the supporting shell (14).

9. Pressing roll according to one of claims 1 to 8, characterised by an elongated cylinder block (37) with a plurality of cylinder bores (17) arranged in a row.

10. Pressing roll according to one of claims 1 to 9, characterised in that the piston (21; 27) of the arrangement has a portion connected to the axis (23).

11. Pressing roll according to one of claims 1 to 10, characterised in that an arrangement is provided for increasing the force between the piston (21; 27) and the roller body (16; 26).

12. Pressing roll according to one of claims 1 to 11, characterised in that the roller body (16; 26) is cylindrical or spherical.

13. Pressing roll according to one of claims 1 to 12, characterised in that the roller body (16; 26) is made of metal or non-metal.

14. Pressing roll according to one of claims 1 to 13, characterised in that the roller body (16; 26) is a roller bearing.

15. Pressing roll according to one of claims 1 to 14, characterised in that the roller body (16; 26) has a convex running surface.

16. Machine for treating material webs or sheets comprising a pressing roll according to one of claims 1 to 15, characterised in that the pressing roll is an F-roll or a K-roll.

## Revendications

1. Cylindre de pressage avec une ligne de flexion pouvant être commandée, comportant un support fixe (1 ; 30), une enveloppe de cylindre (3 ; 33) tournant autour du support (1 ; 30) et plusieurs éléments de soutien (4), les éléments de soutien (4) étant disposés sur une rangée en étant répartis sur la surface de la largeur du cylindre afin de soutenir l'enveloppe (3 ; 33) sur le support (1 ; 30) au niveau du point de pressage, les éléments de soutien (4) comportant des éléments de roulement (16 ; 26 ; 38), et un élément de roulement (16 ; 26) étant à chaque fois associé à plusieurs vérins (17, 21), caractérisé en ce qu'au moins deux éléments de roulement (16 ; 26) voisins sont montés sur un axe commun (23).

2. Cylindre de pressage selon la revendication 1, caractérisé en ce que, dans la direction de déplacement du cylindre de pressage, le diamètre intérieur de l'évidement cylindrique (17) est supérieur à la largeur de l'élément de roulement (16 ; 26).

3. Cylindre de pressage selon l'une des revendications précédentes, caractérisé en ce que les éléments de soutien (4) peuvent être partiellement alimentés par voie pneumatique par l'intermédiaire d'un système de conduites séparé (8).

4. Cylindre de pressage selon l'une quelconque des revendications précédentes, caractérisé en ce qu'un tube d'enveloppe (2 ; 32) est prévu pour l'enveloppe de cylindre (3 ; 33), lequel entoure le support (1 ; 30) et les éléments de soutien (4), et qui est en liaison active avec les éléments de soutien afin d'induire la charge roulante dans l'enveloppe de cylindre (3 ; 33).

5. Cylindre de pressage selon la revendication 4, caractérisé en ce que le tube d'enveloppe (2 ; 32) est constitué d'une enveloppe de roulement (11 ; 36) et d'une enveloppe de soutien (14).

6. Cylindre de pressage selon la revendication 5, caractérisé en ce que l'enveloppe de roulement (11) est constituée de segments annulaires (12) en métal et de bagues intermédiaires (13) en matériau élastiquement déformable.

7. Cylindre de pressage selon la revendication 5, caractérisé en ce que l'enveloppe de roulement (36) est réalisée en forme d'hélice avec des spires (37) adjacentes les unes aux autres.

8. Cylindre de pressage selon l'une quelconque des revendications 5 à 7, caractérisé en ce que l'enveloppe de cylindre (3) est fixée sur l'enveloppe de soutien (14).

9. Cylindre de pressage selon l'une quelconque des revendications 1 à 8, caractérisé par un bloc-cylindre oblong (37) comportant plusieurs perçages cylindriques (17) qui sont disposés sur une rangée.

10. Cylindre de pressage selon l'une quelconque des revendications 1 à 9, caractérisé en ce que le piston (21 ; 27) du dispositif comporte un tronçon qui est en liaison avec l'axe (23).

11. Cylindre de pressage selon l'une quelconque des revendications 1 à 10, caractérisé en ce qu'un dispositif d'amplification de force est prévu entre le piston (21 ; 27) et l'élément de roulement (16 ; 26).

12. Cylindre de pressage selon l'une quelconque des revendications 1 à 11, caractérisé en ce que l'élément de roulement (16 ; 26) est cylindrique ou sphérique.

13. Cylindre de pressage selon l'une quelconque des revendications 1 à 12, caractérisé en ce que l'élément de roulement (16 ; 26) est métallique ou non métallique.

14. Cylindre de pressage selon l'une quelconque des revendications 1 à 13, caractérisé en ce que l'élément de roulement (16 ; 26) est un palier de roulement.

15. Cylindre de pressage selon l'une quelconque des revendications 1 à 14, caractérisé en ce que l'élément de roulement (16 ; 26) comporte une surface de roulement bombée.

16. Machine destinée au traitement de matière en forme de bande ou en forme de panneau avec un cylindre de pressage selon l'une quelconque des revendications 1 à 15, caractérisée en ce que le cylindre de pressage est un cylindre F ou un cylindre K.
